# EUROPÄISCHE PATENTSCHRIFT

(11) **EP 1 053 590 B1**
(45) Veröffentlichungstag und Bekanntmachung des Hinweises auf die Patenterteilung: **09.03.2005**
(21) Anmeldenummer: 99960786.4
(22) Anmeldetag: 16.10.1999
(51) Int. Cl.: H03D 5/00

(54) **EINGANGSSCHALTUNG FÜR FM-/AM-RUNDFUNKEMPFÄNGER**
INPUT CIRCUIT FOR AN FM/AM RADIO RECEIVER
CIRCUIT D'ENTREE POUR RECEPTEURS RADIO AM/FM

(30) Priorität: 07.12.1998 DE 19856284
(43) Veröffentlichungstag der Anmeldung: 22.11.2000
(73) Patentinhaber: ROBERT BOSCH GMBH, 70442 Stuttgart (DE)
(72) Erfinder: KRAWINKEL, Bernward, D-31139 Hildesheim/Sorsum (DE)
(86) Internationale Anmeldenummer: PCT/DE1999/003331
(87) Internationale Veröffentlichungsnummer: WO 2000/035078

(56) Entgegenhaltungen:
- EP-A- 0 575 203
- EP-A- 0 823 751
- DE-A- 2 056 073
- US-A- 4 525 869

## Beschreibung

Die Erfindung betrifft eine Eingangsschaltung für FM-/AM-Rundfunkempfänger mit einer Zwischenfrequenz FM/AM: 10,7 MHz mit einer Schaltung zur FM-Weitabselektion am Antenneneingang, mit einem FM-Zwischenfrequenzsperrkreis am Ausgang der Schaltung zur FM-Weitabselektion mit einem Sperrkreis zur AM-Spiegelfrequenzunterdrückung, mit einer FM-Eingangsschaltung zum Empfang frequenzmodulierter Eingangssignale und mit einer AM-Eingangsschaltung zum Empfang amplitudenmodulierter Eingangssignale.

Herkömmliche Rundfunkempfänger mit wahlweisem AM-Betrieb (Amplitudenmodulation) und FM-Betrieb (Frequenzmodulation) weisen hinter einem gemeinsamen Vorselektionsfilter am Antenneneingang sowohl eine AM- als auch eine FM-Vorstufe auf. Ein solchen Rundfunkempfänge ist in DE-A-2 056 073 veröffentlicht. Die AM-Vorstufe umfaßt unter anderem eine AM-Hochfrequenz (HF)-Selektion und die FM-Vorstufe umfaßt mindestens einen FM-HF-Selektionskreis. Bei der Anschaltung der AM- und der FM-Vorstufe müssen beide Vorstufen gut voneinander entkoppelt sein, um eine gute Empfangsqualität pro Empfangsbereich zu gewährleisten. Hierzu sollte, insbesondere die AM-Vorstufe für die FM-Vorstufe keine nennenswerte kapazitive Last darstellen.

Der Erfindung liegt daher die Problemstellung zugrunde, pro Empfangsbereich einen Sperrkreis der eingangs erwähnten Art so auszubilden, daß die FM-Eingangsschaltung und die AM-Eingangsschaltung bei dem wahlweisen FM- bzw. AM-Betrieb gut voneinander entkoppelt bleiben. Dabei sollte die FM-Zwischenfrequenzfestigkeit erhöht und die AM-Spiegelfrequenzfestigkeit erweitert werden.

Ausgehend von dieser Problemstellung ist eine Eingangsschaltung der eingangs erwähnten Art erfindungsgemäß dadurch gekennzeichnet, daß ein AM-Spiegelfrequenzsperrkreis hinter den FM-Zwischenfrequenzsperrkreis geschaltet ist und PIN-Dioden zur Umschaltung von dem AM-Betrieb auf den FM-Betrieb zwischen dem FM-Zwischenfrequenzsperrkreis und dem AM-Spiegelfrequenzsperrkreis vorgesehen sind, wobei die PIN-Dioden den FM-Zwischenfrequenzsperrkreis für Hochfrequenzsignale auf Masse legen, wenn der FM-Betrieb gewählt ist, während bei einem AM-Betrieb an die Umschalteinrichtung eine Steuerspannung zur automatischen Verstärkungsregelung (AGC) vorgesehen ist und zwischen dem FM-Zwischenfrequenzsperrkreis und dem AM-Spiegelfrequenzsperrkreis angelegt wird.

Mit den PIN-Dioden werden die FM- und die AM-Vorstufe alternativ in Betrieb genommen. Durch die hochfrequenzmäßige Erdung des FM-Zwischenfrequenzsperrkreises und des damit verbundenen AM-Spiegelfrequenzsperrkreises wird die AM-Vorstufe abgekoppelt und der FM-Zwischenfrequenzsperrkreis als Saugkreis betrieben. Hierdurch wird vorteilhafterweise die FM-Zwischenfrequenzfestigkeit erheblich erhöht.

Wenn die Eingangsschaltung mit dem Umschalter durch Anlegen einer AGC-Steuerspannung auf den AM-Betrieb geschaltet ist, gelangt das amplitudenmodulierte Hochfrequenzsignal an den AM-Spiegelfrequenzsperrkreis, so daß Störfrequenzen diesen Frequenzbereichs vorteilhafterweise bereits vor der aktiven AM-Vorstufe stark abgesenkt werden und der Selektionsbedarf hinter der AM-Vorstufe reduziert werden kann. Das amplitudenmodulierte Hochfrequenzsignal wird vor dem AM-Spiegelfrequenzsperrkreis durch den FM-Zwischenfrequenzsperrkreis geleitet, der im AM-Betrieb FM-Störsignale über die Spule L₁ des FM-Zwischenfrequenzsperrkreises absenkt und an seinem Ausgang C₁ nunmehr als kapazitive Ankoppelung dient. Dadurch, daß der AM-Spiegelfrequenzsperrkreis vor der aktiven AM-Vorstufe geschaltet ist, wird die AM-Spiegelfrequenzfestigkeit vorteilhafterweise erheblich verbessert.

Der FM-Zwischenfrequenzsperrkreis ist vorteilhafterweise eine Reihenschaltung aus einer Spule und einem Kondensator. Im AM-Betrieb übernimmt der Kondensator dann die Funktion der kapazitiven Ankoppelung der AM-Vorstufe an den Vorselektionsfilter.

Der AM-Spiegelfrequenzsperrkreis besteht vorteilhafterweise aus der Parallelschaltung einer Spule und eines Kondensators und erfüllt die Funktion einer Frequenzbandsperre.

Der FM-Zwischenfrequenzsperrkreis und der AM-Spiegelfrequenzsperrkreis sind in einer besonderen Ausführungsform in Reihe geschaltet, wobei die PIN-Dioden an den Verbindungspunkt der Reihenschaltung gekoppelt sind. Die erste PIN-Diode ist in Durchlaßrichtung an Masse und die zweite PIN-Diode ist ebenfalls in Durchlaßrichtung an eine Steuerspannung geschaltet. Hierzu ist die Anode der ersten PIN-Diode an den Verbindungspunkt der Reihenschaltung und die Kathode der ersten PIN-Diode an Masse gekoppelt. Die Kathode der zweiten PIN-Diode ist ebenfalls an dem Verbindungspunkt der Reihenschaltung geschaltet und die Anode der zweiten PIN-Diode vorteilhafterweise über einen Widerstand an die Steuerspannung gekoppelt. Die Anode der zweiten PIN-Diode muß zudem mit einem Kondensator an Masse gekoppelt sein.

Die handelsüblichen PIN-Dioden verhalten sich bei tiefen Frequenzen wie gewöhnliche Dioden und haben kleine Verluste und kleine Sperrschichtkapazitäten. Bei höheren Frequenzen haben PIN-Dioden keine Gleichrichterwirkung mehr. Dann verhalten sie sich wie ein Wirkwiderstand, dessen Wert mit steigendem Durchlaßstrom abnimmt. Wird nun eine konstante Spannung an die zweite PIN-Diode angelegt, werden beide PIN-Dioden HF-mäßig in Durchlaßrichtung geschaltet. Die HF-mäßige Parallelschaltung der sehr niederohmigen Wirkwiderstände der PIN-Dioden verbindet den FM-Zwischenfrequenzsperrkreis direkt mit der Masse. Damit wird die AM-Vorstufe vollständig abgekoppelt, sobald der FM-Betrieb durch eine konstante Steuerspannung an der zweiten PIN-Diode ausgewählt ist. Wenn bei AM-Empfang an der zweiten PIN-Diode die grundsätzlich bekannte Steuerspannung zur automatischen Verstärkungsregelung (AGC) anliegt, arbeiten beide PIN-Dioden im Hochfrequenzbetrieb und verhalten sich als Wirkwiderstände. Dann ist der FM-Zwischenfrequenzsperrkreis nicht mehr durch die Parallelschaltung der PIN-Dioden hochfrequenzmäßig geerdet und verhält sich nur noch als kapazitive Ankopplung mit Weitabselektions-Eigenschaften für den nachfolgenden AM-Spiegelfrequenzsperrkreis und die AM-Vorstufe.

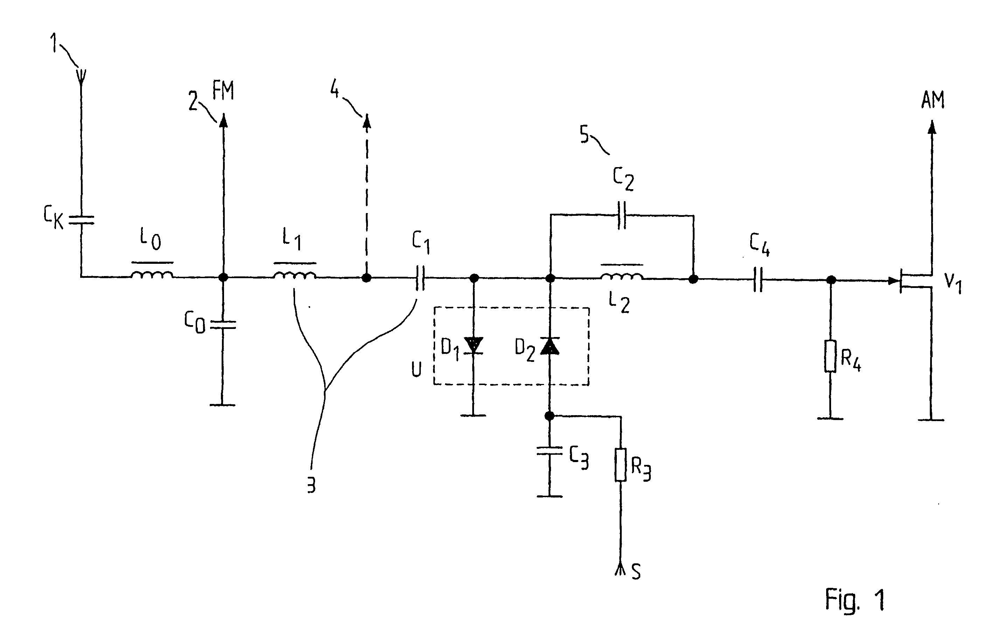

Die Erfindung soll im folgenden anhand eines in der beigefügten Zeichnung dargestellten Prinzipschaltbildes näher erläutert werden.

Die Zeichnung zeigt das Prinzipschaltbild einer Antenneneingangsschaltung für ein FM-/AM-Rundfunkempfänger.

An eine Empfangsantenne 1, die mit einem Kondensator C_{K} verbunden ist, ist ein LC-Tiefpaß zur FM-Weitabselektion gekoppelt, wobei eine Spule L₀ in Reihe hinter dem Kondensator C_{K} der Empfangsantenne 1 geschaltet ist und ein Kondensator C₀ hinter die Spule L₀ geschaltet und mit Masse verbunden ist. An den Ausgang des LC-Tiefpaß ist eine FM-Vorstufe 2 gekoppelt. Weiterhin ist hinter dem LC-Tiefpaß ein FM-Zwischenfrequenzsperrkreis 3 geschaltet, der aus einer Reihenschaltung einer Spule L₁ und einem Kondensator C₁ besteht. Zwischen dieser Reihenschaltung kann eine bekannte Schaltung als Blitzschutz 4 vorgesehen sein. Hinter dem FM-Zwischenfrequenzsperrkreis 3 ist eine Umschalteinrichtung U als PIN-Diodenpaar D₁, D₂ in Serienschaltung vorgesehen, wobei eine erste PIN-Diode D₁ in Durchlaßrichtung mit der Masse verbunden ist. Hierzu ist die Kathode der ersten PIN-Diode D₁ an den Masseanschluß geschaltet. Eine zweite PIN-Diode D₂ ist ebenfalls in Durchlaßrichtung über einen Widerstand R₃ an eine Steuerspannung gekoppelt. Die Kathode der zweiten PIN-Diode D₂ ist mit dem Ausgang des FM-Zwischenfrequenzsperrkreises 3 verbunden. Die Anode der zweiten PIN-Diode D₂ ist mit einem Kondensator C₃ an den Massepunkt gekoppelt.

Das Steuersignal für den AM-Betrieb wird in bekannter Weise erzeugt und dient zur automatischen Verstärkungsregelung, um die AM-Empfangsschaltung bei Anwesenheit von starken Inband-Störsendern nicht zu übersteuern. Als Regelgröße dient vorteilhafterweise eine feldabhängige Gleichspannung.

Direkt hinter dem FM-Zwischenfrequenzsperrkreis 3 ist ein AM-Spiegelfrequenzsperrkreis 5 vorgesehen, der eine Bandsperre bildet durch Parallelschaltung eines Kondensators C₂ und einer Spule L₂. Hinter diesem AM-Spiegelfrequenzsperrkreis 5 ist in an sich bekannter Weise eine AM-Vorstufe mit einem Reihenkondensator C₄, einem nachfolgenden an Masse gelegten Widerstand R₄ und einem Feldeffekttransistor V₁ gekoppelt.

Wird die Antenneneingangsschaltung im FM-Betrieb eingesetzt, dann wird über den Widerstand R₃ eine konstante Spannung an die zweite PIN-Diode D₂ angelegt. Dadurch werden beide PIN-Dioden D₁ und D₂ sehr niederohmig. Zudem liegen sie für das HF-Signal parallel. Somit verbinden sie den FM-Zwischenfrequenzsperrkreis 3 mit Masse. Der FM-Zwischenfrequenzsperrkreis 3 wirkt damit als Zwischenfrequenzsaugkreis. Er ist üblicherweise auf die traditionelle FM-Zwischenfrequenz von 10,7 Mhz ausgelegt.

Im AM-Betrieb wird an die zweite PIN-Diode D₂ eine Steuerspannung zur automatischen Verstärkungsregelung angelegt, die dazu führt, daß der differenzielle Widerstand der Dioden D₁, D₂ durch die Größe des Hochfrequenzsignals bestimmt sind. Sie stellen im Regelungsfall dann Wirkwiderstände dar, was dazu führt, daß der FM-Zwischenfrequenzsperrkreis 3 hochliegt und nur noch als kapazitive Ankoppelung der nachfolgenden AM-Eingangsschaltung sowie bedingt als Siebschaltung wirkt.

Durch die erfindungsgemäße hochfrequenzmäßige Erdung des Ausgangs des FM-Zwischenfrequenzsperrkreises 3 im FM-Betrieb beeinflussen die Kapazitäten der AM-Eingangsschaltung die FM-Vorstufe nicht, so daß der AM-Spiegelfrequenzsperrkreis 5 vor die aktive AM-Vorstufe gelegt werden kann. Dadurch wird die AM-Spiegelfrequenzfestigkeit erheblich erweitert und der Selektionsbedarf hinter der AM-Vorstufe kann reduziert werden.

## Patentansprüche

1. Eingangsschaltung für FM-/AM-Rundfunkempfänger mit einer Schaltung zur FM-Weitabselektion am Antenneneingang, mit einem FM-Zwischenfrequenzsperrkreis (3) am Ausgang der Schaltung zur FM-Weitabselektion, mit einem AM-Spiegelfrequenzsperrkreis (5), mit einer FM-Eingangsschaltung zum Empfangen frequenzmodulierter Eingangssignale (FM) und mit einer AM-Eingangsschaltung zum Empfang amplitudenmodulierter Eingangssignale (AM), **dadurch gekennzeichnet, daß**
- der AM-Spiegelfrequenzsperrkreis (5) hinter den FM-Zwischenfrequenzsperrkreis (3) geschaltet ist und
- zwei PIN-Dioden (D₁, D₂) zur Umschaltung zwischen einem AM-Betrieb und einem FM-Betrieb vorgesehen sind, wobei die PIN-Dioden (D₁, D₂) den Ausgang des FM-Zwischenfrequenzsperrkreises für Hochfrequenzsignale auf Masse legen, wenn der FM-Betrieb gewählt ist, während bei einem AM-Betrieb an den PIN-Dioden (D₁, D₂) eine Steuerspannung (S) zur automatischen Verstärkungsregelung (AGC) zwischen dem FM-Zwischenfrequenzsperrkreis und dem AM-Spiegelfrequenzsperrkreis angelegt wird.

2. Sperrkreis nach Anspruch 1, **dadurch gekennzeichnet, daß** der FM-Zwischenfrequenzsperrkreis (3) eine Reihenschaltung aus einer Spule (L₁) und einem Kondensator (C₁) ist, wobei der Kondensator (C₁) im AM-Betrieb zur kapazitiven Ankoppelung des AM-Spiegelfrequenzsperrkreises (5) an die Schaltung zur FM-Weitabselektion vorgesehen ist.

3. Sperrkreis nach Anspruch 1 oder 2, **dadurch gekennzeichnet, daß** der AM-Spiegelfrequenzsperrkreis (5) eine Parallelschaltung aus einer Spule (L₂) und einem Kondensator (C₂) ist.

4. Sperrkreis nach einem der vorhergehenden Ansprüche, **dadurch gekennzeichnet, daß** die beiden PIN-Dioden (D₁, D₂) an den Verbindungspunkt zwischen dem FM-Zwischenfrequenzsperrkreis (3) und dem AM-Spiegelfrequenzsperrkreis (5) geschaltet sind und die erste PIN-Diode (D₁) in Durchlaßrichtung mit Masse und die zweite PIN-Diode (D₂) in Durchlaßrichtung mit einer Steuerspannung verbunden ist.

5. Sperrkreis nach Anspruch 4, **dadurch gekennzeichnet, daß** die Anode der zweiten PIN-Diode (D₂) mit einem Kondensator (C₃) an Masse gekoppelt ist, wobei die differenziellen Widerstände der beiden PIN-Dioden (D₁, D₂) für die Hochfrequenzsignale parallel geschaltet sind.

6. Sperrkreis nach Anspruch 4 oder 5, **dadurch gekennzeichnet, daß** die Steuerspannung im FM-Betrieb konstant und im AM-Betrieb zum Zweck der Verstärkungsregelung (AGC) in Abhängigkeit einer Feldstärke-Richtspannung variabel ist.

## Claims

1. Input circuit for FM/AM broadcast radio receivers having a circuit for FM outband suppression at the antenna input, having an FM intermediate-frequency rejector circuit (3) at the output of the circuit for FM outband suppression, having an AM image-frequency rejector circuit (5), having an FM input circuit for receiving frequency-modulated input signals (FM) and having an AM input circuit for receiving amplitude-modulated input signals (AM), **characterized in that**
- the AM image-frequency rejector circuit (5) is connected downstream of the FM intermediate-frequency rejector circuit (3), and
- two PIN diodes (D₁, D₂) are provided for changing over between an AM mode and an FM mode, the PIN diodes (D₁, D₂) earthing the output of the FM intermediate-frequency rejector circuit for radio-frequency signals when the FM mode has been chosen, while an AM mode involves a control voltage (S) being applied to the PIN diodes (D₁, D₂) for the purpose of automatic gain control (AGC) between the FM intermediate-frequency rejector circuit and the AM image-frequency rejector circuit.

2. Rejector circuit according to Claim 1, **characterized in that** the FM intermediate-frequency rejector circuit (3) is a series circuit comprising a coil (L₁) and a capacitor (C₁), the capacitor (C₁) being provided for the purpose of capacitively coupling the AM image-frequency rejector circuit (5) to the circuit for FM outband suppression in AM mode.

3. Rejector circuit according to Claim 1 or 2, **characterized in that** the AM image-frequency rejector circuit (5) is a parallel circuit comprising a coil (L₂) and a capacitor (C₂).

4. Rejector circuit according to one of the preceding claims, **characterized in that** the two PIN diodes (D₁, D₂) are connected to the junction point between the FM intermediate-frequency rejector circuit (3) and the AM image-frequency rejector circuit (5), and the first PIN diode (D₁) is connected to earth in the forward direction and the second PIN diode (D₂) is connected to a control voltage in the forward direction.

5. Rejector circuit according to Claim 4, **characterized in that** the anode of the second PIN diode (D₂) is coupled to earth using a capacitor (C₃), the differential resistances of the two PIN diodes (D₁, D₂) being connected in parallel for the radio-frequency signals.

6. Rejector circuit according to Claim 4 or 5, **characterized in that** the control voltage is constant in FM mode, and in AM mode is variable for the purpose of gain control (AGC) as a function of a field-strength directional voltage.

## Revendications

1. Circuit d'entrée pour des récepteurs radio FM / AM, comportant un circuit pour sélectionner l'amplitude FM à l'entrée de l'antenne, un filtre d'arrêt (3) de la fréquence intermédiaire FM à la sortie du circuit pour sélectionner l'amplitude FM, un filtre d'arrêt (5) de fréquence-image AM, un circuit d'entrée FM pour recevoir des signaux d'entrée (FM) modulés en fréquence et un circuit d'entrée AM pour recevoir des signaux d'entrée (AM) modulés en amplitude,
**caractérisé en ce que**
- le filtre d'arrêt (5) pour la fréquence-image AM est monté en aval du filtre d'arrêt (3) pour la fréquence intermédiaire FM et
- on prévoit deux diodes PIN (D₁, D₂) pour passer d'un fonctionnement AM à un fonctionnement FM ; les diodes PIN (D₁, D₂) mettent à la masse la sortie du filtre d'arrêt pour la fréquence intermédiaire FM destiné à des signaux haute fréquence lorsque le fonctionnement FM est sélectionné tandis qu'en cas de fonctionnement AM on applique aux diodes PIN (D₁, D₂) une tension de commande (S) pour régler automatiquement l'amplification (AGC) entre le filtre d'arrêt pour la fréquence intermédiaire FM et le filtre d'arrêt pour la fréquence-image AM.

2. Filtre d'arrêt selon la revendication 1,
**caractérisé en ce que**
le filtre d'arrêt (3) pour la fréquence intermédiaire FM est un montage en série composé d'une bobine (L₁) et d'un condensateur (C₁), et en fonctionnement AM le condensateur (C₁) est prévu pour coupler de façon capacitive le filtre d'arrêt (5) pour la fréquence-image AM au circuit pour sélectionner l'amplitude FM.

3. Filtre d'arrêt selon la revendication 1 ou 2,
**caractérisé en ce que**
le filtre d'arrêt (5) pour la fréquence-image AM est un montage en parallèle d'une bobine (L₂) et d'un condensateur (C₂).

4. Filtre d'arrêt selon l'une des revendications précédentes,
**caractérisé en ce que**
les deux diodes PIN (D₁, D₂) sont connectées au point où le filtre d'arrêt (3) pour la fréquence intermédiaire FM est relié au filtre d'arrêt (5) pour la fréquence-image AM, la première diode PIN (D₁) est reliée dans le sens passant à la masse et la deuxième diode PIN (D₂) est reliée dans le sens passant à une tension de commande.

5. Filtre d'arrêt selon la revendication 4,
**caractérisé en ce que**
l'anode de la deuxième diode PIN (D₂) est couplée à un condensateur (C₃) à la masse, les résistances différentielles des deux diodes PIN (D₁, D₂) pour les signaux haute fréquence étant montées en parallèle.

6. Filtre d'arrêt selon la revendication 4 ou 5,
**caractérisé en ce que**
la tension de commande est constante en fonctionnement FM et est variable en fonctionnement AM afin de régler l'amplification (AGC) en fonction d'une tension redressée de l'intensité de champ.
